# EUROPEAN PATENT APPLICATION

(11) **EP 2 982 648 A1**
(43) Date of publication of application: **10.02.2016**
(21) Application number: 14779845.8
(22) Date of filing: 03.04.2014
(51) Int. Cl.: C01B 31/04

(54) **METHOD FOR MANUFACTURING FLAKED GRAPHITE AND FLAKED GRAPHITE LIQUID DISPERSION, AS WELL AS FLAKED GRAPHITE, FLAKED GRAPHITE LIQUID DISPERSION, AND FLAKED GRAPHITE/RESIN COMPOSITE MATERIAL**

(30) Priority: 05.04.2013 JP 2013079754; 22.07.2013 JP 2013151526; 26.12.2013 JP 2013269481
(71) Applicant: Sekisui Chemical Co., Ltd., Osaka 530-8565 (JP)
(72) Inventor: INUI, Nobuhiko, Mishima-gun Osaka 618-0021 (JP)
(74) Representative: Ter Meer Steinmeister & Partner
(86) International application number: PCT/JP2014/059804
(87) International publication number: WO 2014/163127

(57) **Abstract**

Provided is a method for producing exfoliated graphite in which a reduction treatment is not required and exfoliated graphite can be easily and reliably obtained. The method for producing exfoliated graphite includes a step of immersing a carbon material having a graphene-laminated structure in a liquid containing a liquid substance having a surface tension of 50 mN/m or less at 20°C and a step of heating the carbon material by radiating electromagnetic waves to the carbon material immersed in the liquid, in which, in the step of heating the carbon material by the radiation of the electromagnetic waves, the liquid in contact with the carbon material is gasified, thereby exfoliating the carbon material.

## Description

### Technical Field

The present invention relates to a method for producing exfoliated graphite and exfoliated graphite liquid dispersion in which exfoliated graphite is obtained from a carbon material having a graphene-laminated structure such as graphite or expanded graphite.

In addition, the present invention relates to exfoliated graphite and an exfoliated graphite liquid dispersion obtained using the above-described method for producing exfoliated graphite and an exfoliated graphite liquid dispersion and an exfoliated graphite-resin composite material obtained by mixing the exfoliated graphite or the exfoliated graphite liquid dispersion and a resin.

### Background Art

In the related art, exfoliated graphite has been drawing attention due to its capability of effectively improving the mechanical properties and the like of resins with a small addition amount thereof. PTL 1 discloses an example of a method for producing exfoliated graphite as described above. In the method for producing exfoliated graphite described in PTL 1, graphite is immersed in an aqueous solution of a strong acid such as nitric acid and is heated. The graphite is peeled off by intercalating acidic ions such as nitric acid ions between graphene sheets in the graphite and heating the graphite into which the nitric acid ions are intercalated and exfoliated graphite having a smaller number of laminated graphene sheets can be obtained.

### Citation List

### Patent Literature

[PTL 1] JP-T-2009-511415

### Summary of Invention

### Technical Problem

However, in the method for producing exfoliated graphite described in PTL 1, the graphite is exposed to a strong acid. Therefore, the obtained exfoliated graphite includes oxidized graphene. As a result, it has not been possible to develop sufficient conductivity and the like without carrying out a reduction treatment.

In addition, a complicated treatment in which the graphite is immersed in a strong acid and is heated has been required.

An object of the present invention is to provide a method for producing exfoliated graphite and an exfoliated graphite liquid dispersion in which a reduction treatment is not required and exfoliated graphite can be easily and reliably obtained. In addition, another object thereof is to provide exfoliated graphite and an exfoliated graphite liquid dispersion obtained using the above-described method for producing exfoliated graphite and an exfoliated graphite liquid dispersion and an exfoliated graphite-resin composite material obtained by mixing the exfoliated graphite or the exfoliated graphite liquid dispersion and a resin.

### Solution to Problem

A method for producing exfoliated graphite according to the present invention, includes: a step of immersing a carbon material having a graphene-laminated structure in a liquid containing a liquid substance having a surface tension of 50 mN/m or less at 20°C; and a step of heating the carbon material by radiating electromagnetic waves to the carbon material immersed in the liquid, in the step of heating the carbon material by the radiation of the electromagnetic waves, the liquid in contact with the carbon material being gasified, thereby exfoliating the carbon material.

In the method for producing exfoliated graphite according to the present invention, it is preferable that, as the liquid, the liquid having a boiling point in a range of 50°C to 250°C is used.

In the method for producing exfoliated graphite according to the present invention, it is preferable that the carbon material having the graphene-laminated structure is graphite, expanded graphite, or preliminarily exfoliated graphite.

In a specific aspect of the method for producing exfoliated graphite according the present invention, a reactive compound is used as the liquid. It is preferable that in the step of exfoliating the carbon material, the reactive compound is chemically bonded to the carbon material. It is preferable that the reactive compound is a Diels-Alder reactive compound. It is preferable to use a Fiedel-Crafts reactive compound.

In a specific aspect of the method for producing exfoliated graphite according to the present invention, a solvent may be used as the liquid. It is preferable that the solvent includes at least one solvent selected from a group consisting of alcohols having 8 or less carbon atoms, toluene, xylene, chlorobenzene, dichlorobenzene, bromobenzene, dibromobenzene, benzylamine, methyl benzylamine, N-methylpyrrolidone, and N,N-dimethyl formamide.

In the method for producing exfoliated graphite according to the present invention, it is preferable that in the step of exfoliating the carbon material, a compound is chemically bonded to the carbon material.

In a specific aspect of the method for producing exfoliated graphite according to the present invention, a radical reactive compound is used as the compound.

In a specific aspect of the method for producing exfoliated graphite according to the present invention, a compound that forms a reversible chemical bond may be used as the compound.

It is preferable that the chemical bond that forms the reversible chemical bond is a chemical bond formed using a Diels-Alder reactive compound.

In the method for producing exfoliated graphite according to the present invention, it is preferable that the chemical bond forming the above-described chemical bond is formed using a Fridel-Crafts reactive compound.

In the method for producing exfoliated graphite according to the present invention, it is preferable that the chemical bond that forms the reversible chemical bond is a coordinate bond formed using a cyclopentadienyl composite compound.

The method for producing exfoliated graphite according to the present invention, may further include: a cooling step of cooling a mixture of the carbon material and the liquid after the electromagnetic wave radiation step, and in that case, the electromagnetic wave radiation step and the cooling step may be carried out multiple times in order to obtain the exfoliated graphite.

In another specific aspect of the method for producing exfoliated graphite according to the present invention, the mixture of the carbon material and the liquid may be partially cooled when the electromagnetic waves are radiated.

Exfoliated graphite according to the present invention is obtained using the method for producing exfoliated graphite according to the present invention. It is preferable that a content of the compound or the reactive compound chemically bonded to the exfoliated graphite is in a range of 0.5 weight% to 100 weight% in relation to 100 weight% of the obtained exfoliated graphite.

A method for producing an exfoliated graphite liquid dispersion according to the present invention, includes: a step of immersing a carbon material having a graphene-laminated structure in a liquid containing a liquid substance having a surface tension of 50 mN/m or less at 20°C; and a step of heating the carbon material by radiating electromagnetic waves to the carbon material immersed in the liquid, in which the carbon material is exfoliated by gasifying part of the liquid in contact with the carbon material in the step of heating the carbon material by the radiation of the electromagnetic waves and an exfoliated graphite liquid dispersion in which exfoliated graphite is dispersed in the liquid is obtained.

An exfoliated graphite liquid dispersion according to the present invention is obtained using the method for producing an exfoliated graphite-dispersed liquid according to the present invention. It is preferable that a compound is chemically bonded to exfoliated graphite in the exfoliated graphite liquid dispersion and a content of the compound is in a range of 0.5 weight% to 100 weight% in relation to 100 weight% of the exfoliated graphite.

An exfoliated graphite-resin composite material according to the present invention is obtained by mixing the exfoliated graphite or the exfoliated graphite liquid dispersion according to the present invention and a resin. Advantageous Effects of Invention

According to the method for producing exfoliated graphite and an exfoliated graphite liquid dispersion of the present invention, it is possible to exfoliate a carbon material and obtain exfoliated graphite simply by immersing the carbon material in a liquid and then radiating electromagnetic waves. Therefore, it is possible to easily and reliably obtain exfoliated graphite and an exfoliated graphite liquid dispersion. Furthermore, since a step in which the exfoliated graphite is oxidized is not essentially required, a reduction treatment is not required.

In addition, since the exfoliated graphite and the exfoliated graphite liquid dispersion are uniformly dispersed in the resin, it is possible to obtain an exfoliated graphite-resin composite material in which the mechanical properties of the resin are significantly improved.

### Brief Description of Drawings

Fig. 1 is a view illustrating the width and thickness of exfoliated graphite obtained in Example 1 that are measured through AFM measurement.
Fig. 2 is a view illustrating the width and thickness of exfoliated graphite obtained in Example 2 that are measured through AFM measurement.
Fig. 3 is a view illustrating the width and thickness of exfoliated graphite obtained in Example 3 that are measured through AFM measurement.
Fig. 4 is a view illustrating the width and thickness of exfoliated graphite obtained in Example 4 that are measured through AFM measurement.
Fig. 5 is a view illustrating the width and thickness of exfoliated graphite obtained in Example 5 that are measured through AFM measurement.
Fig. 6 is a view illustrating the width and thickness of exfoliated graphite obtained in Example 6 that are measured through AFM measurement.
Fig. 7 is a view illustrating the ¹H-NMR spectrum of a filtrate obtained in Example 6.
Fig. 8 is a view illustrating the width and thickness of exfoliated graphite obtained in Example 7 that are measured through AFM measurement.
Fig. 9 is a view illustrating the width and thickness of exfoliated graphite obtained in Example 8 that are measured through AFM measurement.
Fig. 10 is a view illustrating the width and thickness of exfoliated graphite obtained in Example 9 that are measured through AFM measurement. Description of Embodiments

Hereinafter, the present invention will be described in detail.

In a method for producing exfoliated graphite and an exfoliated graphite liquid dispersion according to the present invention, first, a carbon material having a graphene-laminated structure is immersed in a liquid containing a liquid substance having a surface tension of 50 mN/m or less at 20°C. After that, the carbon material is heated by radiating electromagnetic waves. Therefore, part or all of the liquid in contact with the carbon material is gasified so as to exfoliate the carbon material and exfoliated graphite and an exfoliated graphite liquid dispersion in which exfoliated graphite is dispersed in the liquid are obtained.

### (Carbon material having graphene-laminated structure)

As the carbon material having a graphene-laminated structure that is used in the present invention, a carbon material having a structure in which multiple graphene sheets, such as graphite sheets, are laminated can be used. In addition, as a graphite raw material, thermally expandable graphite obtained by carrying out an acid treatment on graphite or expanded graphite obtained by heating and expanding the thermally expandable graphite may be used. In this case, the intrusion of the liquid into graphite becomes easy according to the production method of the present invention and thus exfoliated graphite can be more effectively obtained. Meanwhile, preliminarily exfoliated graphite having a smaller number of laminated graphene layers than natural graphite may be used as the carbon material which serves as a raw material. In this case, it is possible to obtain exfoliated graphite having a smaller number of laminated layers according to the production method of the present invention.

In the present invention, the exfoliated graphite refers to a graphene sheet laminate which is obtained by carrying out an exfoliating treatment on the original graphite and is thinner than the original graphite. The number of laminated graphene sheets in the exfoliated graphite is not limited as long as the number is smaller than in the original graphite; however, generally, the number of laminated graphene sheets is in a range of approximately several layers to 200 layers.

### (Liquid)

In the method for producing exfoliated graphite and an exfoliated graphite liquid dispersion of the present invention, in a state in which the carbon material having a graphene-laminated structure is immersed in a liquid containing a liquid substance having a surface tension of 50 mN/m or less at 20°C, the carbon material is exfoliated by radiating electromagnetic waves and exfoliated graphite or an exfoliated graphite liquid dispersion in which exfoliated graphite is dispersed in the liquid are obtained.

When the carbon material is immersed in the liquid, an appropriate amount of the carbon material may be immersed in the liquid as long as the carbon material is heated by being irradiated with electromagnetic waves.

In the present specification, the liquid refers to a liquid substance having a surface tension of 50 mN/m or less at 20°C or a mixture of liquid substances containing at least one liquid substance having a surface tension of 50 mN/m or less at 20°C. Regarding the mixture of liquid substances, the mixture may have a surface tension of 50 mN/m or less or may not have a surface tension of 50 mN/m or less as long as the mixture contains at least one liquid substance having a surface tension of 50 mN/m or less at 20°C.

As described above, in the present invention, the liquid contains at least one liquid substance having a surface tension of 50 mN/m or less at 20°C. Therefore, it is possible to make graphite more exfoliated.

In addition, the boiling point of the liquid is desirably in a range of 50°C to 250°C. In this case, it is possible to easily gasify the liquid by radiating electromagnetic waves and more effectively exfoliate graphite.

In the present invention, as the liquid in which the carbon material having a graphene-laminated structure is immersed, it is possible to use a solvent. There is no particular limitation regarding the solvent being used and examples thereof include alcohols having 8 or less carbon atoms such as methanol, ethanol, and isopropyl alcohol, toluene, xylene, chlorobenzene, dichlorobenzene, bromobenzene, dibromobenzene, benzylamine, methyl benzylamine, N-methylpyrrolidone, N,N-dimethyl formamide, and the like. The solvent preferably includes at least one selected from a group consisting of alcohols having 8 or less carbon atoms, toluene, xylene, chlorobenzene, dichlorobenzene, bromobenzene, dibromobenzene, benzylamine, methyl benzylamine, N-methylpyrrolidone, and N,N-dimethyl formamide. Only one solvent may be used or a solvent mixture of two or more solvents may be used. In addition, the solvent may be used after other solvents such as water are further added to the solvent in addition to the above-described preferred solvents.

In addition, in the present invention, as the liquid, a reactive compound may be used instead of the solvent. In this case, since the solvent is not used, the collection or isolation of the solvent is not required and it is possible to simplify production steps. The reactive compound is preferably chemically bonded to the carbon material in a step of exfoliating the carbon material. In this case, the obtained exfoliated graphite can be more uniformly dispersed in a resin. The content of the chemically-bonded reactive compound is preferably in a range of 0.5 weight% to 100 weight% in relation to 100 weight% of the obtained exfoliated graphite.

The reactive compound is preferably a Diels-Alder reactive compound or a Fiedel-Crafts reactive compound. In a case in which a Diels-Alder reactive compound or a Fiedel-Crafts reactive compound is used, it is possible to make graphite more exfoliated as described below.

Examples of the Diels-Alder reactive compound as the liquid include furfural derivatives such as furfural, furfuryl alcohol, furfuryl amine, 5-methyl-2-furaldehyde, furfuryl mercaptan, and 2-furoyl chloride, furan derivatives such as 2-methylfuran, 2-ethylfuran, 2-methoxyfuran, and 2-furonitrile, vinyl-denatured solvents such as p-chlorostyrene and N-vinyl-2-pyrrolidone, imines such as phenylimidazoline, and the like. The above-described compounds may be used singly or two or more compounds may be jointly used.

In a case in which furfuryl alcohol, N-vinyl-2-pyrrolidone, or the like is used, reaction byproducts are rarely generated even after the exfoliated graphite production step by the radiation of electromagnetic waves described below and thus furfuryl alcohol or N-vinyl-2-pyrrolidone is used. In this case, it is possible to easily collect and reuse the furfuryl alcohol used.

As the Fiedel-Crafts reactive compound which serves as the liquid, any compounds can be used as long as the compound is an ordinary halide, carboxylic acid halide, acid anhydride, or the like and, for example, an alkyl halogen such as N-chlorooctane or N-octanoyl chloride, a benzoic acid halide such as an aliphatic acid halide or benzoyl chloride, an acid anhydride such as succinic anhydride, phthalic anhydride, or propionic anhydride, or the like can be used. The above-described compounds may be used singly or two or more compounds may be jointly used.

In addition, a catalyst may be further added to the above-described liquid. In a case in which a catalyst is added, the catalyst facilitates the occurrence of a chemical reaction and thus effects such as an additional decrease in the amount of electromagnetic waves radiated or the reaction time and an additional decrease in the addition amount of the reactive compound being added can be obtained.

There is no particular limitation regarding the catalyst and, for example, (1) a metal halide represented by MXn (here, M represents a metal belonging to Periodic Table Groups 2 to 7, X represents a halogen, and n represents an integer in a range of 2 to 5), (2) a composite salt represented by MAX, (3) a composite compound represented by ML or MLX, (4) a trivalent phosphorous compound, all of which will be described below, or the like can be used.

### (1) Metal halide represented by MXn:

M represents a metal belonging to Periodic Table Groups 2 to 7. Examples of the above-described metal include helium, boron, magnesium, aluminum, silicon, calcium, scandium, titanium, vanadium, chromium, manganese, iron, cobalt, nickel, zinc, gallium, strontium, yttrium, zirconium, niobium, molybdenum, technetium, ruthenium, rhodium, palladium, silver, cadmium, indium, tin, antimony, hafnium, tantalum, tungsten, rhenium, osmium, iridium, platinum, gold, mercury, thallium, lead, bismuth, and the like. X represents a halogen which is fluorine, chlorine, bromine, or iodine. n represents an integer in a range of 2 to 5 depending on the atomic valence of the metal.

Among the above-described MXn, examples of preferred metal halides include copper chloride, iron chloride, zinc chloride, and aluminum chloride in which X is chlorine. The above-described metal chlorides are preferred due to their inexpensive prices and relatively weak toxicity.

In addition, the metal halide represented by MXn may be a metal halide including multiple halogens such as MX₁X₂. In this case, X₁ and X₂ represent different halogen elements.

### (2) Composite salt represented by MAX:

In a case in which an acid is used as A, a composite salt made up of an acid, a halogen, and a metal, which is represented by MAX, is obtained. M represents a metal element belonging to Periodic Table Groups 2 to 7 as described above. A represents an acid. The acid may be an inorganic acid such as sulfuric acid, nitric acid, phosphoric acid or boric acid or an organic acid.

### (3) Composite compound represented by ML or MLX M represents a metal element belonging to Periodic

Table Groups 2 to 7. L represents a compound which serves as a ligand such as acetyl acetone, ethylene diamine, phthalocyanine, ammonia, carbon monoxide, or cyanide. X is as described above.

### (4) Trivalent phosphorous compound

Examples of the trivalent phosphorous compound include triphenyl phosphite, a trialkyl phosphite, and the like.

### (Radiation of electromagnetic waves)

In the present invention, electromagnetic waves are radiated to the carbon material that is immersed in the liquid. In this case, the electromagnetic waves are not particularly limited and electromagnetic waves having a wavelength in a range of approximately 5 kHz to 100 GHz can be used. Therefore, the electromagnetic waves may be microwaves.

Regarding a device that radiates the electromagnetic waves, an appropriate electromagnetic wave generator can be used as long as the generator is capable of radiating the above-described electromagnetic waves. In addition, a commercially available microwave oven may be used as the electromagnetic wave generator. In this case, it is possible to dispose the carbon material immersed in the liquid in the microwave oven and radiate electromagnetic waves.

The radiation amount of the electromagnetic waves is not particularly limited as long as exfoliated graphite can be obtained by heating the carbon material.

When the electromagnetic waves are radiated, the carbon material immersed in the liquid is heated. As a result, part or all of the liquid is gasified at portions in which the liquid is in contact with the carbon material. Due to stress generated when the gas is gasified, the carbon material having a graphene-laminated structure is exfoliated. This is considered to be because part or all of the liquid present at portions in which graphene sheets are laminated together turns into gas and is gasified and the graphene sheets are peeled off from each other due to a force generated by volume expansion at this time.

The temperature-increase rate due to the radiation of the electromagnetic waves is not particularly limited; however, a higher temperature-increase rate leads to a greater volume expansion rate of the gasifying gas and thus facilitates the obtainment of exfoliated graphite. Therefore, while it is difficult to directly measure the temperature-increase rate of the carbon material that is heated by the radiation of the electromagnetic waves, the temperature-increase rate regarding the temperature of the liquid in which the carbon material is immersed is preferably 15°C/minute or more, more preferably 100°C/minute or more, and still more preferably 500°C/minute or more. When the temperature-increase rate is too great, there are cases in which the radiation amount of the electromagnetic waves becomes excessive.

In the present invention, the carbon material may be jointly heated using a heater or the like in addition to the heating by the radiation of the electromagnetic waves. For example, when the carbon material is preliminarily heated to the boiling point or lower of the liquid using a heater or the like, the radiation amount of the electromagnetic waves can be reduced. Therefore, it is possible to decrease the energy of the electromagnetic waves or the load of a device.

The inventors of the present application found for the first time that, when the carbon material is heated in a state of being immersed in the liquid as described above, the liquid is gasified between graphene sheets, the carbon material is exfoliated, and exfoliated graphite can be obtained. The present invention has been made on the basis of this finding found by the inventors of the present application for the first time.

### (Concentration of carbon material)

Since the surface area of the carbon material is increased as the carbon material becomes more exfoliated by the radiation of the electromagnetic waves, the viscosity of the liquid dispersion increases as the exfoliating of the carbon material proceeds. Therefore, in order to maintain the dispersion uniformity of the liquid dispersion, the concentration of the carbon material is preferably low. On the other hand, when the concentration of the carbon material is too low, the amount of electromagnetic wave energy necessary for the heating and gasification of the liquid dispersion increases. Therefore, the concentration of the carbon material is preferably set to be high in the initial phase and decreases as the carbon material becomes more exfoliated. The above-described concentration adjustment of the carbon material is preferably carried out using a method in which a liquid is added as necessary as the carbon material becomes exfoliated by the radiation of the electromagnetic waves, thereby decreasing the concentration, a method in which exfoliated graphite that has been sufficiently exfoliated is partially separated and collected, or the like.

### (Chemical bonding)

In the present invention, preferably, when exfoliated graphite is obtained by heating the carbon material through the radiation of the electromagnetic waves, it is desirable to chemically bond the compound to the carbon material. Therefore, it is possible to obtain exfoliated graphite having a smaller number of laminated layers. This is considered to be because the compound is bonded to graphene through a chemical bond, and as a result of the bonding reaction, the chemical bond weakens the π bonds between graphene sheets, and thus the carbon material becomes more exfoliated. In addition, preferably, the above-described reaction is desirably a chemical bond in which the compound and graphene can be reversibly bonded together and dissociated from each other. In this case, when the compound and graphene are bonded together and dissociated from each other repeatedly, it is possible to make the carbon material more exfoliated.

While there is no particular limitation regarding a compound that generates the chemical bond in the carbon material, graphite has radical adsorption properties and thus a radical-reactive compound or a Fiedel-Crafts reactive compound is desirably used. Examples of the radical-reactive compound include compounds having a (meth)acryl group, a vinyl group, a vinyl ether group, a glycidyl group, a thiol group, a halogen group, or the like. In addition, as the Fiedel-Crafts reactive compound, any compound can be used as long as the compound is an ordinary halide, carboxylic acid halide, acid anhydride, or the like and, for example, an alkyl halogen such as N-chlorooctane or N-octanoyl chloride, a benzoic acid halide such as an aliphatic acid halide or benzoyl chloride, an acid anhydride such as succinic anhydride, phthalic anhydride, or propionic anhydride, or the like can be used.

As described above, while there is no particular limitation regarding the compound that forms a reversible chemical bond, preferably, a chemical bond generated using a Diels-Alder reactive compound is desirable and, in this case, it is possible to make the carbon material more exfoliated.

As the Diels-Alder reactive compound, any compound can be used as long as the compound is an ordinary diene or dienophile and examples thereof include maleic acids such as maleic anhydride, dimethyl maleate, and maleimide, alkenes such as tetracyanoethylene, dimethyl fumarate, and acrolein, alkenes such as dimethyl acetylenedicarboxylate, cyclic dienes such as benzoquinone, anthraquinone, quinodimethane, cyclopentadiene, and cyclohexene, a dienophile and acenes such as anthracene, furans such as furfuryl alcohol and furfural, butadienes such as 2,3-dimethyl-1,3-butadiene, arynes such as benzyne, imines such as benzylideneaniline, styrene, derivatives thereof, and the like.

In addition, as the above-described compound that forms a reversible chemical bond, a cyclopentadienyl composite compound may also be used. Examples of the cyclopentadienyl composite compound include ferrocene, nickelocene, titanocene, zirconocene, and derivatives thereof. That is, there is no particular limitation regarding the form of the chemical bond as long as other compounds are chemically bonded to exfoliated graphite and the compound may be bonded to exfoliated graphite through a coordination bond in which the cyclopentadienyl composite compound is used.

In the case of the chemical bonding in which the above-described cyclopentadienyl composite compound is used, it is possible to remove the compound through washing or the like after the carbon material is exfoliated, which is preferable.

The above-described chemically-bonded compound has an effect that prevents the re-lamination or agglomeration of graphene sheets that have been peeled off once and has excellent dispersibility in a solvent or a resin. Therefore, the content of the chemically-bonded compound is preferably in a range of 0.5 weight% to 100 weight% in relation to 100 weight% of the obtained exfoliated graphite.

The chemically-bonded compound can be detected using a well-known analysis method such as NMR or IR. The detection method is not limited to any specific analysis method; however, from the viewpoint of convenience and quantitative properties, generally, thermogravimetric measurement is used. In thermogravimetric measurement, in a case in which the compound is chemically bonded to the carbon material, generally, the decomposition temperature of the compound is detected at a temperature higher than the ordinary decomposition temperature thereof. In addition, for the purpose of the structural analysis of a thermally-decomposed substance of the compound, MS measurement and the like may be carried out in combination.

### (Pressure control)

In the radiation of the electromagnetic waves and the heating and exfoliating of the carbon material during which the chemical bonding reaction of the compound in the present invention is caused, the pressure in the reaction system may be set to 1 atmosphere or higher. This is because the volume of the system decreases as the chemical bonding reaction of the compound proceeds and thus increasing the pressure enables the additional progression of the chemical bonding of the compound. At this time, the pressure is not particularly limited as long as the pressure is 1 atmosphere or higher, but the pressure is preferably 1.5 atmosphere or more. In addition, the pressure control is not limited to increasing the pressure due to the heating and gasification of the liquid or the compound through the radiation of the electromagnetic waves and may be carried out by the injection of gas from outside or the mechanical addition of pressure. A high pressure has an effect that further accelerates the chemical bonding reaction; however, in some cases, an excessively high pressure makes the gasification of the liquid difficult and thus the pressure is preferably 50 atmospheres or lower and more preferably 10 atmospheres or lower.

### (Cooling step)

In the method for producing exfoliated graphite and an exfoliated graphite liquid dispersion according to the present invention, a cooling step may be carried out after the above-described step of heating the carbon material by radiating the electromagnetic waves. Preferably, the heating by the radiation of the electromagnetic waves and the cooling step are carried out multiple times and, accordingly, the carbon material is repeatedly peeled off by stress generated when the liquid is gasified by the immersion of the carbon material in the liquid and heating the carbon material and exfoliated graphite having a smaller number of laminated sheets can be obtained. The cooling method in the cooling step is not particularly limited and an appropriate method such as a method in which cold air is blown, natural cooling, or water cooling can be used.

In addition, a mixture of the carbon material and the liquid may be partially cooled. Therefore, it is possible to form a continuous or semi-continuous process in which the electromagnetic waves are continuously radiated. The above-described partial cooling method can be achieved by, for example, circulating the mixture of the carbon material and the liquid between an electromagnetic wave radiation section and a cooling section.

### (Exfoliated graphite)

In the method for producing exfoliated graphite of the present invention, as described above, exfoliated graphite can be obtained simply by radiating the electromagnetic waves to the carbon material immersed in the liquid. Therefore, the obtained exfoliated graphite does not have any oxidization history and thus a complicated reduction treatment is not required. In addition, the exfoliated graphite obtained in the above-described manner is not oxidized and thus develops high conductivity.

### (Exfoliated graphite liquid dispersion)

In the present invention, when all of the liquid in contact with the carbon material is gasified in the step of heating the carbon material by the radiation of the electromagnetic waves as described above, it is possible to obtain exfoliated graphite. It is also possible to obtain an exfoliated graphite liquid dispersion in which the exfoliated graphite is dispersed in the liquid by gasifying part of the liquid in contact with the carbon material in the step of heating the carbon material by the radiation of the electromagnetic waves. In this case, the exfoliated graphite can be collected by removing the liquid from the exfoliated graphite liquid dispersion.

In the collection of the exfoliated graphite from the exfoliated graphite liquid dispersion, it is possible to use a well-known method such as filtration, centrifugal separation, gravitational sedimentation, solvent separation, an agglomerating agent, or an adsorbing agent. Meanwhile, the obtained exfoliated graphite liquid dispersion can be used as it is. In this case, it is desirable to separate out impurities such as unreacted compounds using a solvent or the like.

### (Exfoliated graphite-resin composite material)

An exfoliated graphite-resin composite material is obtained by complexing the exfoliated graphite or the exfoliated graphite liquid dispersion and a resin. The obtained composite material can be used as an electrochemical material such as a conductive material, a thermoelectric material, a dielectric material, an electromagnetic wave-absorbing material, and a sensor material and a mechanical strength material such as a stiff material, a heat-resistant material, and a dimensionally stable material.

As the resin, a desired resin such as a thermosetting resin or a thermoplastic resin can be appropriately used. As described above, in the present invention, it is preferable to chemically bond the compound to exfoliated graphite. Therefore, when a compound having a high affinity to the desired resin is used, it is possible to further increase the dispersibility of the exfoliated graphite in the resin.

Particularly, the exfoliated graphite or exfoliated graphite liquid dispersion to which the compound is chemically bonded does not easily allow the re-agglomeration of the exfoliated graphite and has excellent dispersibility and thus the exfoliated graphite or exfoliated graphite liquid dispersion can be easily used in the above-described composite materials. In addition, in the exfoliated graphite to which the compound is chemically bonded, it is possible to introduce a functional group into the surface of the exfoliated graphite. In this case, since the interaction with the resin can be designed, the obtained composite material has excellent properties as an electrochemical and mechanical material.

### (Examples and Comparative Examples)

Hereinafter, the present invention will be clarified using specific examples and comparative examples of the present invention. Meanwhile, the present invention is not limited to the following examples.

### (Example 1)

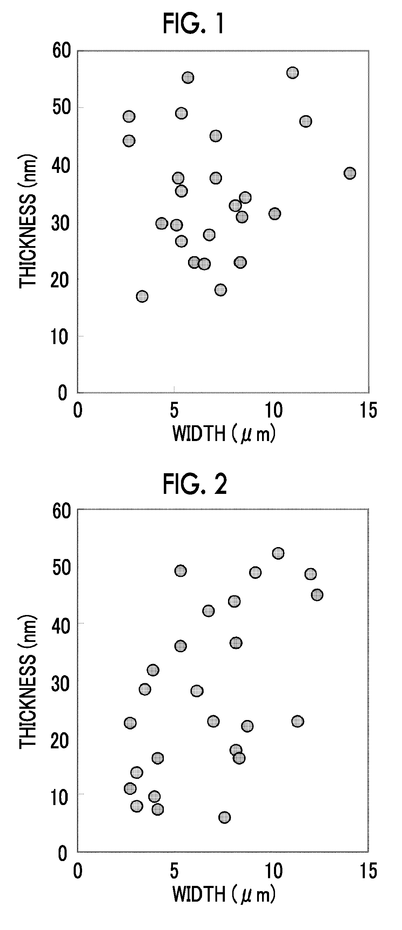

A carbon material having a graphene structure (0.3 g, produced by Toyo Tanso Co., Ltd., product No.: PF powder 8F) and ethanol (10 g, boiling point=78°C, surface tension at 20°C=22 mN/m) were fed into a 200 ml glass bottle and the carbon material was immersed in the ethanol. The glass bottle including a liquid dispersion in which the carbon material was immersed in the ethanol in the above-described manner was set in a commercially available microwave oven with the opening section open. A heating treatment was carried out using the microwave oven at an output of 750 W for 20 seconds. Almost all the ethanol was gasified and only the carbon material remained in the glass bottle. Ethanol (10 g) was added again to the carbon material that had been subjected to the above-described electromagnetic wave treatment, the carbon material was soaked with the ethanol, and a heating treatment was carried out using the microwave oven at an output of 750 W for 20 seconds. This step was repeated 15 times. Exfoliated graphite was obtained in the above-described manner. The dimensions of the obtained exfoliated graphite were evaluated through AFM measurement. The results are illustrated in Fig. 1.

The method for measuring the exfoliated graphite through AFM measurement was as described below.

Evaluation of the dimensions of the exfoliated graphite: The concentration of the exfoliated graphite was set to 0.05 weight% by adding ethanol to the obtained exfoliated graphite. After that, ultrasonic waves were provided using an ultrasonic washer and the exfoliated graphite was sufficiently dispersed in the ethanol. Next, the above-described exfoliated graphite ethanol liquid dispersion was cast on a specimen table for atomic force microscope (AFM) measurement and the ethanol was naturally dried. As the AFM, a nanoscale hybrid microscope, manufactured by Keyence Corporation, product No.: VN-8000, was used. The exfoliated graphite was observed using the AFM and the width and thickness thereof were obtained.

### (Example 2)

Flacked graphite was obtained in the same manner as in Example 1 except for the facts that N-methylpyrrolidone (boiling point=202°C, surface tension at 20°C=41 mN/m) was used instead of ethanol, the solvent was not added since a sufficient amount of N-methylpyrrolidone remained in the glass bottle even after the heating by the microwave oven, and, finally, the exfoliated graphite was collected through filtration. In addition, in the same manner as in Example 1, the exfoliated graphite was diluted using ethanol and was dispersed by adding ultrasonic waves, and the dimensions of the exfoliated graphite were measured using AFM. The results are illustrated in Fig. 2.

### (Example 3)

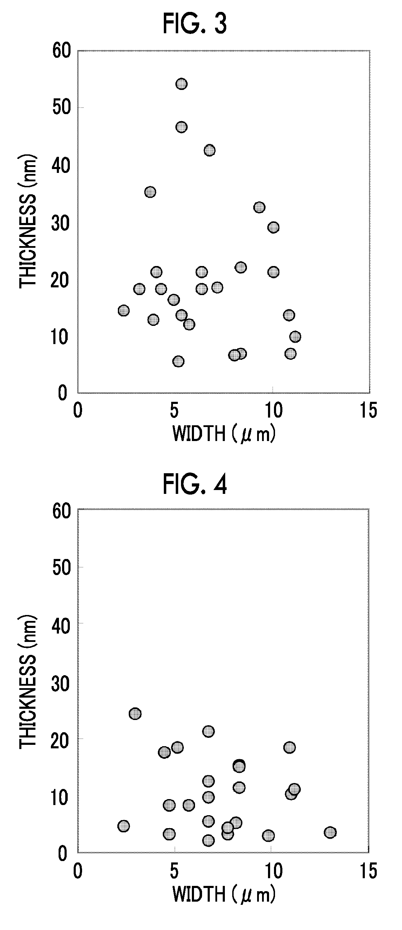

A carbon material (0.3 g, produced by Toyo Tanso Co., Ltd., product No.: PF powder 8F) and N-methylpyrrolidone (10 g, boiling point=202°C, surface tension at 20°C=41 mN/m) were fed into a 200 ml glass bottle and the carbon material was sufficiently soaked with N-methylpyrrolidone, thereby obtaining a liquid dispersion. Glycidyl methacrylate (0.2 g) was added to the liquid dispersion and the components were sufficiently stirred. After that, a heating treatment was carried out using a commercially available microwave oven at an output of 750 W for 20 seconds in a state in which the opening section of the glass bottle was open. After that, a cooling step was carried out until the liquid dispersion reached ordinary temperature. The heating and cooling step was repeated 3 times. A stage in which a step made up of the addition of the glycidyl methacrylate, the heating by the microwave oven, and the cooling was repeated 3 times was considered as 1 set and a total of 5 sets were repeated. The obtained liquid dispersion was filtered, was sufficiently washed using acetone, and was dried, thereby obtaining exfoliated graphite. The obtained exfoliated graphite was evaluated through AFM measurement in the same manner as in Example 1. The results are illustrated in Fig. 3.

### (Example 4)

Exfoliated graphite was obtained in the same manner as in Example 3 except for the facts that maleic anhydride was used instead of glycidyl methacrylate. For the obtained exfoliated graphite, the thickness and size of the exfoliated graphite were obtained through AFM measurement in the same manner as in Example 1. The results are illustrated in Fig. 4.

### (Example 5)

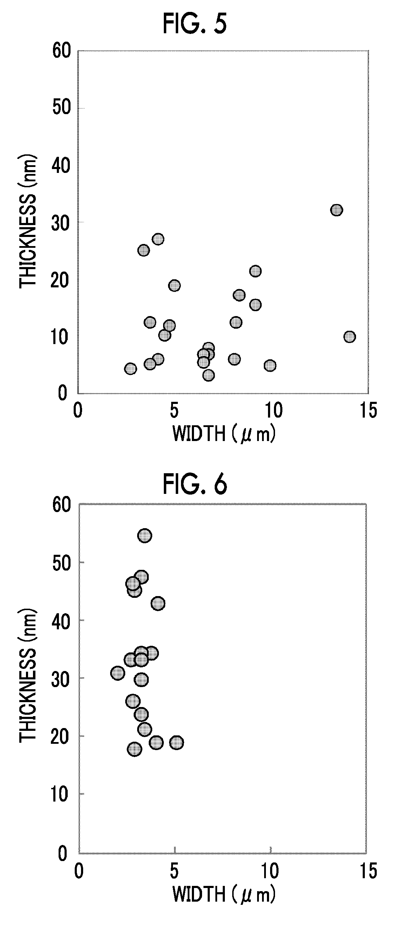

Exfoliated graphite was obtained in the same manner as in Example 3 except for the facts that ferrocene was used instead of glycidyl methacrylate. For the obtained exfoliated graphite, the thickness and size of the exfoliated graphite were obtained through AFM measurement in the same manner as in Example 1. The results are illustrated in Fig. 5.

### (Example 6)

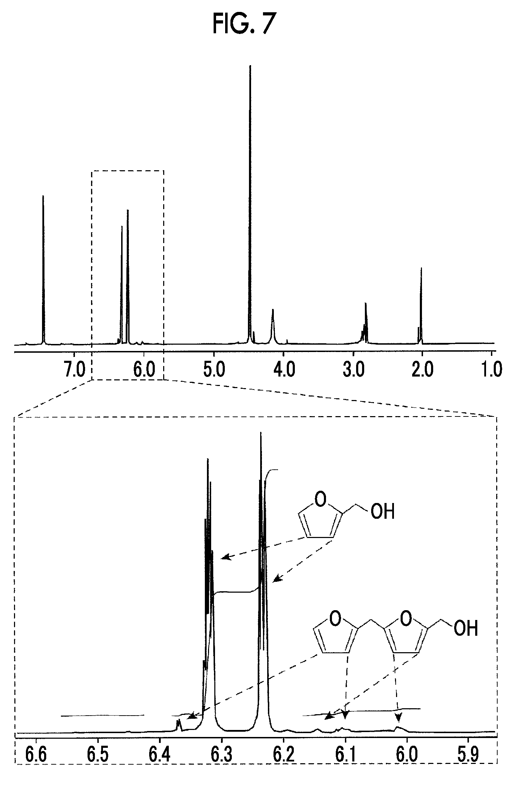

A carbon material (0.5 g, produced by SEC CARBON, Ltd., product No.: fine powder SNO15) and furfuryl alcohol (20 g, produced by Tokyo Kasei Kogyo Co., Ltd., melting point=-29°C, boiling point=170°C, surface tension at 20°C=38 mN/m) were fed into a 200 ml glass bottle and the carbon material was sufficiently soaked with the furfuryl alcohol, thereby obtaining a liquid dispersion. A heating treatment was carried out using a commercially available microwave oven at an output of 750 W for 20 seconds in a state in which the opening section of the glass bottle of the liquid dispersion was open. After that, a cooling step was carried out until the liquid dispersion reached ordinary temperature and this heating and cooling step were repeated 15 times. The obtained liquid dispersion was filtered, was sufficiently washed using acetone, and was dried, thereby obtaining exfoliated graphite. The obtained exfoliated graphite was evaluated through AFM measurement in the same manner as in Example 1. The results are illustrated in Fig. 6. In addition, the filtrate obtained by filtering the liquid dispersion was separately collected and a structural analysis was carried out using ¹H-NMR. The results are illustrated in Fig. 7.

### (Example 7)

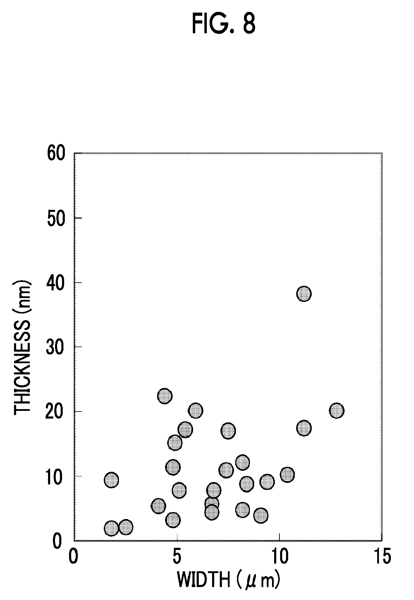

Exfoliated graphite was obtained in the same manner as in Example 6 except for the facts that N-vinyl-2-pyrrolidone (boiling point=204°C, surface tension at 20°C=41 mN/m) was used instead of furfuryl alcohol. For the obtained exfoliated graphite, the thickness and size of the exfoliated graphite were obtained through AFM measurement in the same manner as in Example 1. The results are illustrated in Fig. 8.

### (Example 8)

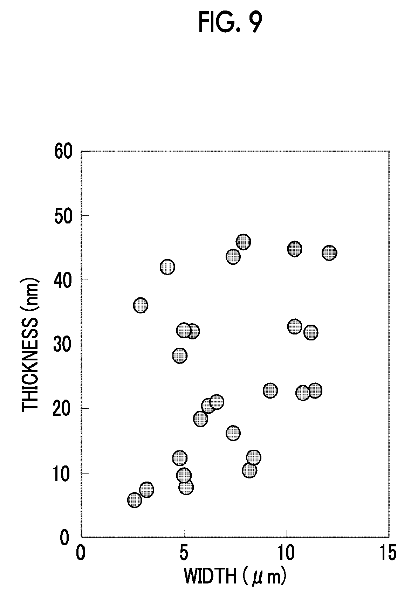

Exfoliated graphite was obtained in the same manner as in Example 3 except for the facts that N,N-dimethylformamide (boiling point=153°C, surface tension at 20°C=36 mN/m) was used instead of N-methylpyrrolidone and azodicarbonamide (produced by Otsuka Chemical Co., Ltd., VINYFOR AC#K3) was used instead of glycidyl methacrylate. For the obtained exfoliated graphite, the thickness and size of the exfoliated graphite were obtained through AFM measurement in the same manner as in Example 1. The results are illustrated in Fig. 9.

### (Example 9)

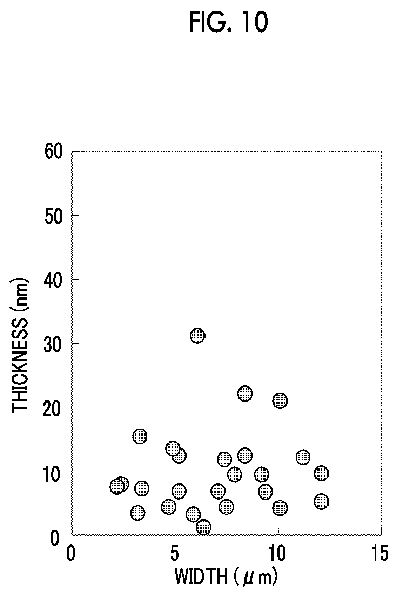

A carbon material (0.3 g, produced by Toyo Tanso Co., Ltd., product No.: PF powder 8F), benzoyl chloride (10 g, boiling point=198°C, surface tension at 20°C=39 mN/m), and aluminum chloride (0.03 g) as a catalyst were fed into a 200 ml glass bottle and the carbon material was sufficiently soaked with the benzoyl chloride, thereby obtaining a liquid dispersion. A heating treatment was carried out using a commercially available microwave oven at an output of 750 W for 20 seconds in a state in which the opening section of the glass bottle of the liquid dispersion was open. After that, a cooling step was carried out until the liquid dispersion reached ordinary temperature and this heating and cooling step were repeated 15 times. The obtained liquid dispersion was filtered, was sufficiently washed using acetone, and was dried, thereby obtaining exfoliated graphite. For the obtained exfoliated graphite, the thickness and size of the exfoliated graphite were obtained through AFM measurement in the same manner as in Example 1. The results are illustrated in Fig. 10.

### (Comparative Example 1)

Exfoliated graphite was obtained in the same manner as in Example 2 except for the facts that a liquid made only of water (boiling point=100°C, surface tension at 20°C=73 mN/m) was used instead of N-methylpyrrolidone. The obtained exfoliated graphite was evaluated through AFM measurement in the same manner as in Example 1. However, the thickness of the graphite was too great to be measured using AFM.

As is clear from Figs. 1 to 5, it was found that, according to Examples 1 to 5, exfoliated graphite having a thickness of approximately 60 nm or less was stably obtained. Particularly, as illustrated in Figs. 3 to 5, it was found that, in a case in which the compound that causes a graft reaction is added, the carbon material is more exfoliated. Particularly, as illustrated in Figs. 4 and 5, it was found that, in a case in which the carbon material is grafted using maleic anhydride or ferrocene, it is possible to make the carbon material more exfoliated.

In addition, as is clear from Fig. 6, it was found that, according to Example 6, when furfuryl alcohol, which is a Diels-Alder reactive compound of the liquid is used at room temperature, it is possible to stably obtain exfoliated graphite having a thickness of approximately 60 nm or less without using other solvents.

Furthermore, from the ¹H-NMR spectrum of Fig. 7, it was found that, in a case in which furfuryl alcohol is used, a reaction byproduct such as a condensate of furfuryl alcohol is rarely generated even after the exfoliated graphite production step by the radiation of the electromagnetic waves. Therefore, in a case in which furfuryl alcohol is used, it is possible to easily collect and reuse furfuryl alcohol that is not chemically bonded to the exfoliated graphite.

In addition, as is clear from Figs. 8 to 10, it was found that, even in Examples 7 to 9, exfoliated graphite h aving a thickness of approximately 60 nm or less can be st ably obtained.

## Claims

1. A method for producing exfoliated graphite, comprising:
a step of immersing a carbon material having a graphene-laminated structure in a liquid containing a liquid substance having a surface tension of 50 mN/m or less at 20°C; and
a step of heating the carbon material by radiating electromagnetic waves to the carbon material immersed in the liquid,
in the step of heating the carbon material by the radiation of the electromagnetic waves, the liquid in contact with the carbon material being gasified, thereby exfoliating the carbon material.

2. The method for producing exfoliated graphite according to Claim 1,
wherein a boiling point of the liquid is in a range of 50°C to 250°C.

3. The method for producing exfoliated graphite according to Claim 1 or 2,
wherein the carbon material having the graphene-laminated structure is graphite, expanded graphite, or preliminarily exfoliated graphite.

4. The method for producing exfoliated graphite according to any one of Claims 1 to 3,
wherein the liquid is a reactive compound.

5. The method for producing exfoliated graphite according to Claim 4,
wherein, in the step of exfoliating the carbon material, the reactive compound is chemically bonded to the carbon material.

6. The method for producing exfoliated graphite according to Claim 4 or 5,
wherein the reactive compound is a Diels-Alder reactive compound.

7. The method for producing exfoliated graphite according to Claim 4 or 5,
wherein the reactive compound is a Fridel-Crafts reactive compound.

8. The method for producing exfoliated graphite according to any one of Claims 1 to 3,
wherein the liquid is a solvent.

9. The method for producing exfoliated graphite according to Claim 8,
wherein the solvent includes at least one solvent selected from a group consisting of alcohols having 8 or less carbon atoms, toluene, xylene, chlorobenzene, dichlorobenzene, bromobenzene, dibromobenzene, benzylamine, methyl benzylamine, N-methylpyrrolidone, and N,N-dimethyl formamide.

10. The method for producing exfoliated graphite according to any one of Claims 1 to 3, 8, and 9,
wherein, in the step of exfoliating the carbon material, a compound is chemically bonded to the carbon material.

11. The method for producing exfoliated graphite according to Claim 10,
wherein a radical reactive compound is used as the compound.

12. The method for producing exfoliated graphite according to Claim 10,
wherein a compound that forms a reversible chemical bond is used as the compound.

13. The method for producing exfoliated graphite according to Claim 12,
wherein the chemical bond that forms a reversible chemical bond is formed using a Diels-Alder reactive compound.

14. The method for producing exfoliated graphite according to Claim 10,
wherein the chemical bond is formed using a Fridel-Crafts reactive compound.

15. The method for producing exfoliated graphite according to Claim 12,
wherein the chemical bond that forms a reversible chemical bond is a coordinate bond formed using a cyclopentadienyl composite compound.

16. The method for producing exfoliated graphite according to any one of Claims 1 to 15, further comprising:
a cooling step of cooling a mixture of the carbon material and the liquid after the electromagnetic wave radiation step,
wherein the electromagnetic wave radiation step and the cooling step are carried out multiple times in order to obtain the exfoliated graphite.

17. The method for producing exfoliated graphite according to any one of Claims 1 to 16,
wherein the mixture of the carbon material and the liquid is partially cooled when the electromagnetic waves are radiated.

18. Exfoliated graphite obtained using the method for producing exfoliated graphite according to any one of Claims 1 to 17.

19. Exfoliated graphite obtained using the method for producing exfoliated graphite according to any one of Claims 5 to 7 and 10 to 15,
wherein a content of the compound or the reactive compound chemically bonded to the exfoliated graphite is in a range of 0.5 weight% to 100 weight% in relation to 100 weight% of the obtained exfoliated graphite.

20. An exfoliated graphite-resin composite material obtained by mixing the exfoliated graphite according to Claim 18 or 19 and a resin.

21. A method for producing an exfoliated graphite liquid dispersion, comprising:
a step of immersing a carbon material having a graphene-laminated structure in a liquid containing a liquid substance having a surface tension of 50 mN/m or less at 20°C; and
a step of heating the carbon material by radiating electromagnetic waves to the carbon material immersed in the liquid,
wherein the carbon material is exfoliated by gasifying part of the liquid in contact with the carbon material in the step of heating the carbon material by the radiation of the electromagnetic waves and an exfoliated graphite liquid dispersion in which exfoliated graphite is dispersed in the liquid is obtained.

22. An exfoliated graphite liquid dispersion obtained using the method for producing an exfoliated graphite-dispersed liquid according to Claim 21.

23. The exfoliated graphite liquid dispersion according to Claim 22,
wherein a compound is chemically bonded to exfoliated graphite in the exfoliated graphite liquid dispersion and a content of the compound is in a range of 0.5 weight% to 100 weight% in relation to 100 weight% of the exfoliated graphite.

24. An exfoliated graphite-resin composite material obtained by mixing the exfoliated graphite liquid dispersion according to Claim 22 or 23 and a resin.
